# EUROPEAN PATENT SPECIFICATION

(11) **EP 2 631 112 B1**
(45) Date of publication and mention of the grant of the patent: **13.04.2016**
(21) Application number: 11834260.9
(22) Date of filing: 13.10.2011
(51) Int. Cl.: B60N 2/28, B60R 22/10, B60N 2/26, B60R 22/18

(54) **CHILD SEAT**
KINDERSITZ
SIÈGE ENFANT

(30) Priority: 18.10.2010 JP 2010233913
(43) Date of publication of application: 28.08.2013
(73) Proprietor: Combi Corporation, Tokyo 111-0041 (JP)
(72) Inventor: YAMAGUCHI Isao, Saitama-shi Saitama 336-0017 (JP)
(74) Representative: Liesegang, Eva
(86) International application number: PCT/JP2011/073547
(87) International publication number: WO 2012/053420

(56) References cited:
- GB-A- 2 277 863
- JP-A- 2000 313 264
- JP-A- 2004 359 192
- JP-U- 52 164 829
- JP-U- 53 121 635
- US-A- 5 797 654
- US-A1- 2002 036 419
- US-A1- 2004 061 323
- US-A1- 2006 108 845

## Description

### TECHNICAL FIELD

The present invention relates to a child seat (child safety seat (CSS)) including a guide member to be engaged with a seatbelt of a vehicle so as to locate the seatbelt to a proper position. In particular, the present invention relates to a child seat including an easy-to-handle guide member which does not interfere with the seating process of a child.

### BACKGROUND ART

Child seats to be placed on seats of vehicles have been widely employed, in order to safely carry children (juveniles such as babies, infants, school children, etc.) in a vehicle. Such child seats are also called junior seats (booster seats). In general, a child seat called junior seat is used to suitably secure a relatively older child, such as a school child or a pupil, onto a vehicle seat designed for an adult, by means of a vehicle seatbelt. Namely, a child seat generally called junior seat brings the child into a higher position to enable the proper use of the vehicle seatbelt (see, e.g., JP2000-503281T).

In recent years, seatbelts installed on vehicles, in particular seatbelts installed on automobiles, are of the so-called three-point type, which include not only a waist belt extending from one side of the waist to the other side thereof, but also a shoulder belt extending from one side of the waist to the opposite side shoulder. Thus, even when a seat surface position is adjusted by using a child seat generally called junior seat, there further remains the need to suitably adjust the path of the shoulder belt. At this time, the position of the shoulder belt can be preferably varied in accordance with the growth of a child using the child seat.

In the child seat disclosed in JP2000-503281T, a belt holder for adjusting the position of the shoulder belt is disposed to project from the backrest of the seat. However, the belt holder disclosed in JP2000-503281T cannot vary the position on which the belt is held, in accordance with the growth of a child. In addition, in the child seat disclosed in JP2000-503281T, two belt holders are disposed to laterally project from both sides of the backrest of the seat, in order to make up for the fact that an inclination direction of the shoulder belt varies depending on the location of the child seat set inside the vehicle. However, one belt holder that can handle two shoulder belts inclined in different directions is preferable, because it reduces the number of components which can directly lower costs. Furthermore, a child seat to be used in a vehicle, which has a plurality of projecting components, is unpreferable in terms of safety.

A child seat according to the preamble of claim 1 is known from GB2277863A.

From this viewpoint, a child seat in which a guide member for guiding a shoulder belt is mounted on a seat body with a strap member has been developed. According to such a child seat, the positions of the oppositely inclined shoulder belts can be adjusted with the use of only one guide member. This guide member has the advantage that it can be used in a child seat of a type not including a back part (backless type child seat).

However, in this child seat, although the guide member is restrained by the strap member, the guide member may take various positions within a wide range. Thus, it is difficult to fasten the seatbelt on a child seated on the child seat, with the seatbelt being engaged with the guide member. Furthermore, engaging the seatbelt with the guide member is in itself a complicated operation. Also, when the guide member is not used, the guide member might be placed on, e.g., a seat part of the child seat. In this case, the guide member interferes with the smooth boarding and seating process of a child.

### DISCLOSURE OF THE INVENTION

The present invention has been made in view of the above circumstances, and the object of the present invention is to provide an easy-to-handle child seat including a guide member capable of being engaged with a seatbelt of a vehicle. In particular, the guide member does not interfere with the boarding and seating process of a child.

The child seat according to the present invention is a child seat to be placed on a seat of a vehicle equipped with a seatbelt, the child seat comprising: a seat body including a seat part and a back part; a strap member having an attached part attached to the seat body; and a guide member held on a position away from the attached part of the strap member, the guide member being engageable with a shoulder belt of the seatbelt of the vehicle; wherein a through-hole through which the guide member held by the strap member can pass is formed in the back part.

In the child seat according to the present invention, the two through-holes may be formed on positions away from each other in a lateral direction of the back part; and the two through-holes may be located on symmetrical positions about a center in the lateral direction, and the attached part of the strap member may be positioned between the two through-holes in the lateral direction.

In addition, in the child seat according to the present invention, an opening shape of the through-hole may be determined such that the guide member can pass through the through-hole when the guide member is in a predetermined orientation, but cannot pass through the through-hole when the guide member is in an orientation other than the predetermined orientation.

Furthermore, in the child seat according to the present invention, an elongate opening through which the shoulder belt of the seatbelt of the vehicle may be formed in the guide member; and a width of the guide member along a longitudinal direction of the opening is larger than a maximum width of the through-hole, and a width of the guide member along a direction perpendicular to the longitudinal direction of the opening may be smaller than the maximum width of the through-hole.

Furthermore, in the child seat according to the present invention, a child belt for securing a child onto the seat body can be fitted on the seat body; a second through-hole through which the child belt can pass may be further formed in the back part; and the through-hole may be formed, as a hole separated from the second through-hole, laterally outward from the second through-hole.

Furthermore, in the child seat according to the present invention, the back part may include a rear part facing a child seated on the seat body from behind, and a side part extending from a side periphery of the rear part to a position lateral to the child; and the through-hole may be formed in an area including a position where the rear part and the side part are joined to each other, or in the side part.

Furthermore, in the child seat according to the present invention, the attached part of the strap member may be fixed to the seat part of the seat body.

Furthermore, in the child seat according to the present invention, the back part of the seat body may be detachable from the seat part.

Furthermore, in the child seat according to the present invention, the strap member may extend from the seat body to a side which does not face the child seated on the seat body; and the through-hole formed in the back part may be configured such that the guide member held by the strap member can pass therethrough from a side of a rear surface of the back part which does not face the child seated on the seat body. In such a child seat according to the present invention, a path of the strap member may be formed in the rear surface of the back part, the path leading to the through-hole. In such a child seat according to the present invention, the path may be defined by a reinforcement rib disposed on the rear surface of the back part so as to extend in an up and down direction.

Furthermore, in the child seat according to the present invention, a housing part capable of housing the guide member may be formed in the seat body. In such a child seat according to the present invention, the seat part of the seat body may include a core member and a cushion member located above the core member; and the housing part may be formed by a recessed part disposed in a portion of the core member, the portion being covered with the cushion member.

According to the present invention, it is possible to effectively prevent that the guide member capable of being engaged with a seatbelt of a vehicle interferes with the boarding and seating process of a child. In addition, it is possible to effectively prevent that an operation for engaging the vehicle seatbelt with the guide member is complicated.

### BRIEF DESCRIPTION OF THE DRAWINGS

Fig. 1 is a perspective view for explaining an embodiment of the present invention, showing one used condition of a child seat on which a child is seated.
Fig. 2 is a perspective view showing the child seat shown in Fig. 1 , which is placed on a seat installed in a vehicle.
Fig. 3 is a perspective view showing the child seat shown in Fig. 1 from behind.
Fig. 4 is a perspective view showing a seat part of the child seat shown in Fig. 1.
Fig. 5 is a perspective view of the seat part shown in Fig. 4, in an exploded condition.
Fig. 6 is a perspective view showing a core member of the seat part shown in Fig. 4.
Fig. 7 is a view for explaining how to fit the seatbelt on a guide member.
Fig. 8 is a view for explaining a condition of the guide member when the guide member passes through a through-hole.
Fig. 9 is a perspective view corresponding to Fig. 1, showing another used condition of the child seat shown in Fig. 1.
Fig. 10 is a perspective view showing the child seat shown in Fig. 9.
Fig. 11 is a perspective view showing the child seat shown in Fig. 9 from behind, for explaining how to fasten a child belt.
Fig. 12 is a view showing the child seat shown in Fig. 9 from a lateral side.
Fig. 13 is a perspective view corresponding to Figs. 1 and 9, showing still another used condition of the child seat shown in Fig. 1.
Fig. 14 is a perspective view showing the child seat shown in Fig. 13.

### BEST MODE FOR CARRYING OUT THE INVENTION

One embodiment of the present invention is described herebelow with reference to the drawings. In the drawings attached to the specification, the dimensions and the aspect ratios are suitably changed or exaggerated from the actual ones, in order to facilitate illustration and understanding.

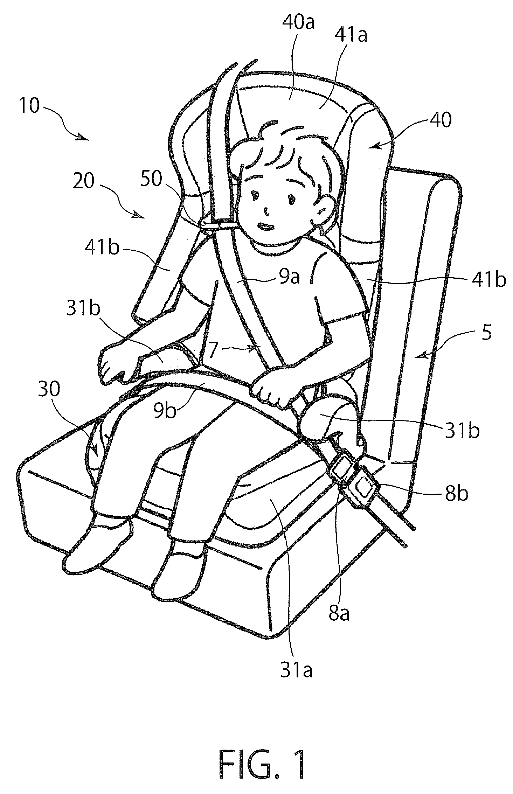

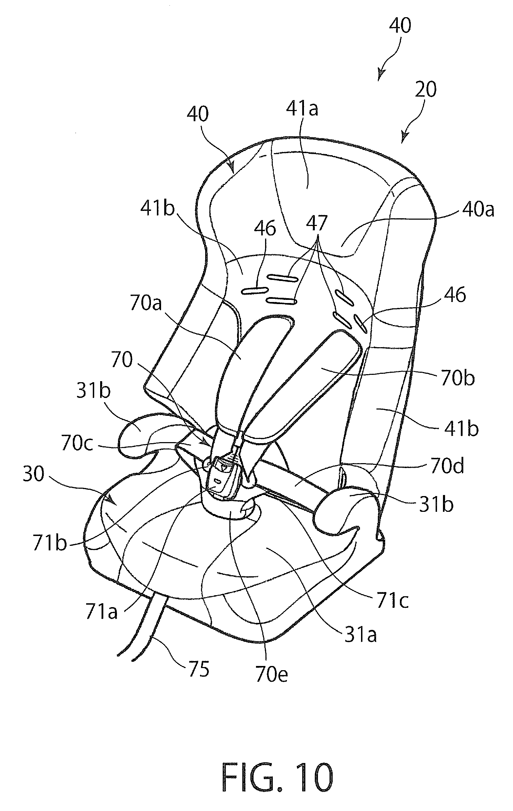

Figs. 1 to 14 are views for explaining one embodiment of the present invention. The illustrated child seat 10 according to this embodiment is used by placing it on a seat 5 of a vehicle such as an automobile. The child seat 10 is an apparatus for safely carrying a child (juvenile such as a baby, an infant, a school child, etc.) in a vehicle including a seat (vehicle seat) 5 and a seatbelt 7, which are designed for an adult. In one used condition of the child seat 10 shown in Figs. 1 to 8, the child seat 10 brings the child into a position higher than the vehicle seat 5 to enable the proper use of the vehicle seatbelt 7 designed to fit an adult's body size. Herebelow, the child seat 10 in this embodiment is described with reference mainly to the used condition shown in Figs. 1 to 8.

In this specification, the terms "front (forth)", "rear (back, behind)", "right", "left", "lateral", "up" and "down" used for the child seat 10 and its constituent elements mean, unless otherwise specified, "front (forth)", "rear (back, behind)", "right", "left", "lateral", "up" and "down", with respect to a child seated on the child seat 10, respectively. A "width direction" of the child car seat 10 and its constituent elements means a direction connecting the "left" and "right", i.e., the "lateral direction".

Furthermore, a "back and forth" direction of the child seat 10 and its constituent elements means a direction connecting the "front" and the "back". In the illustrated example, the "back and forth" direction corresponds to the "back and forth direction" or the "traveling direction" of the vehicle.

As shown in the attached drawings, the child seat 10 includes: a seat body 20 to be placed on the vehicle seat 5, a strap member 60 disposed on the seat body 20 and extending from the seat body 20; and a guide member 50 held by the strap member 60 and capable of being engaged with the vehicle seatbelt 7. As shown in the attached drawings, the child seat 10 in this embodiment has substantially a symmetrical structure as a whole, about a plane (laterally central plane) which passes a center of the width direction along the back and forth direction.

The seatbelt 7 is of a so-called three-point type, including a shoulder belt 9a extending from one side (e.g., right side) of the shoulder to the other side (e.g., left side) of the waist, and a waist belt 9a extending from the one side of the waist to the other side of the waist. The seatbelt 7 further includes an engagement piece 8a and a fixed buckle 8b disposed on the other side of the seat 5. One belt-like member passes through the engagement piece 8a, and the engagement member folds the one belt-like member so as to divide and define the shoulder belt 9a and the waist belt 9b. When the engagement piece 8a is locked on the fixed buckle 8b, the body of a person seated on the seat 5 can be secured onto the seat 5.

As shown in Figs. 1 to 8, the seat body 20 includes a seat part 30 to be in contact with the hips of a seated child, and a back part 40 to be in contact with the back of the seated child. The seat part 30 includes a support part 31a to be in contact with the hips of the child seated on the child seat 10, and armrest parts 31b located on both sides of the support part 31a which are to be located on both sides of the child. On the other hand, the back part 40 includes a rear part 41a facing the back of the child seated on the child seat 10 from behind, and side parts 41b located on both sides of the rear part 41a which are to face the child from both sides.

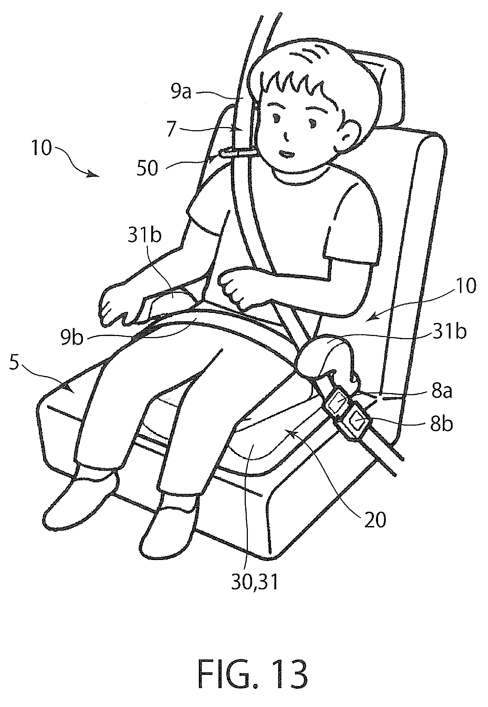

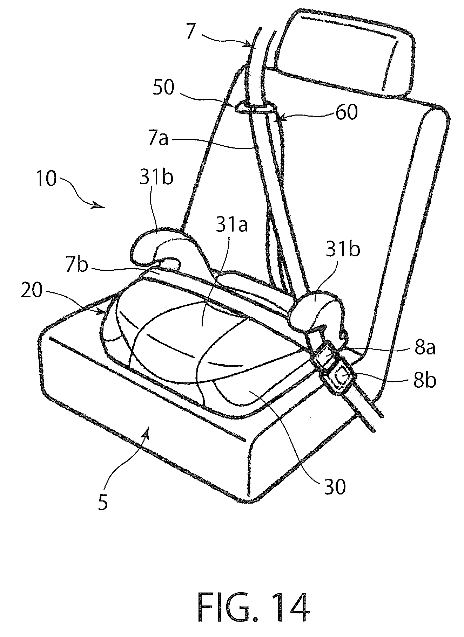

In this embodiment, the back part 40 of the seat body 20 can be detached from the seat part 30. As shown in Figs. 13 and 14, the child seat 10 can be used, with the back part 40 being detached therefrom. In addition, an inclination angle of the back part 40 with respect to the seat part 30 may be variable. Namely, the back part 40 may be configured such that the back part 40 can be reclined.

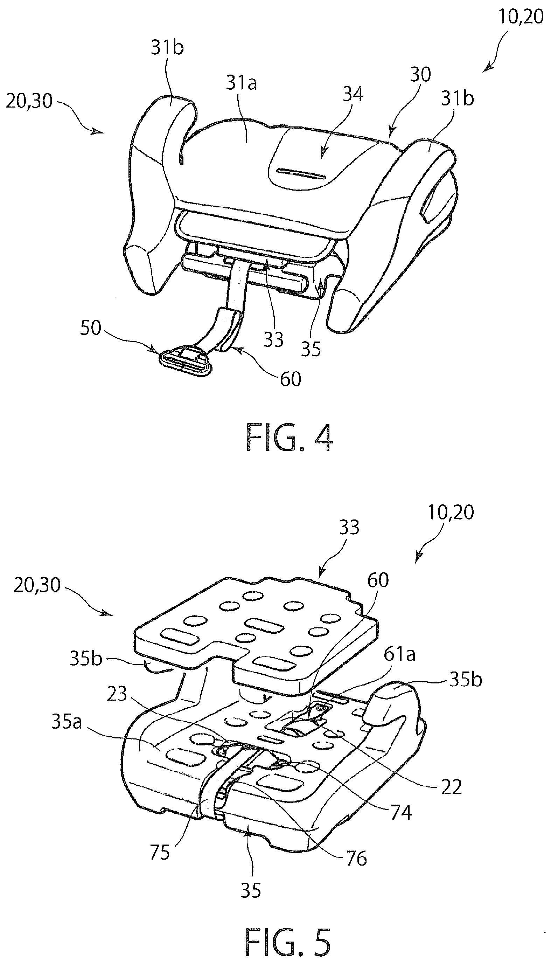

The seat part 30 including the support part 31a and the armrest parts 31b is firstly described. As shown in Fig. 4, each armrest part 31b curvilinearly extends from a rear portion of the support part 31a, with a gap formed between the armrest part 31b and the support part 31a. As shown in Fig. 1, due to the gaps between the armrest parts 31b and the support part 31a, the shoulder belt 9a of the vehicle seatbelt 7 and the waist belt 9b thereof can be guided on proper positions.

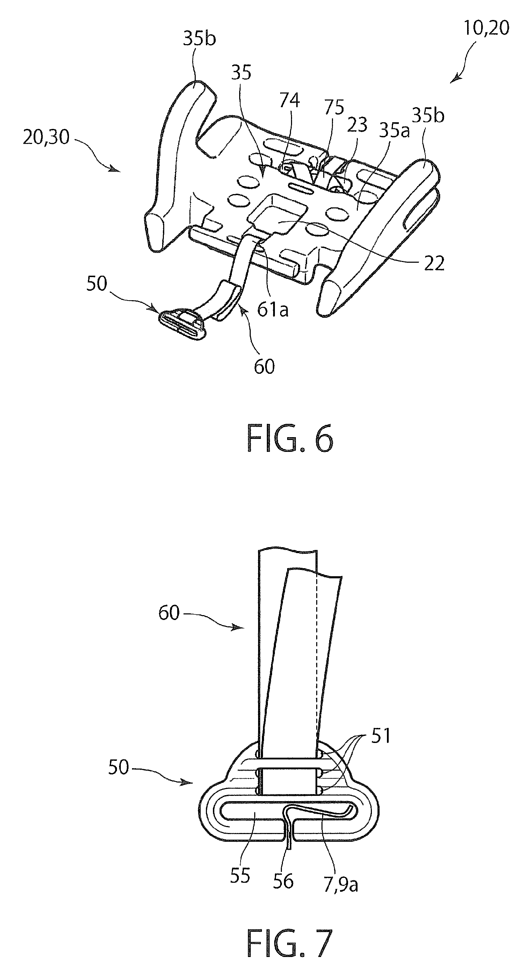

As well shown in Figs. 4 to 6, the seat part 30 includes: a core member 35 made of a hard resin or the like; a cushion member 33 made of a sponge material, which is located above the core member 35; and a cover member 34 laid on the core member 35 to cover the cushion member 33. The core member 35 is made of, e.g., a reinforced resin, the cushion member 33 is made of, e.g., a sponge material, and the cover member 34 is made of a fabric-like material such as a fabric, a mesh material, a soft resin such as vinyl, a rubber, a leather and so on. As well shown in Fig. 6, the core member 35 includes a body part 35a which corresponds to the support part 31a, and projecting parts 35b located on both sides of the body part 35a which correspond to the armrest portions 31b.

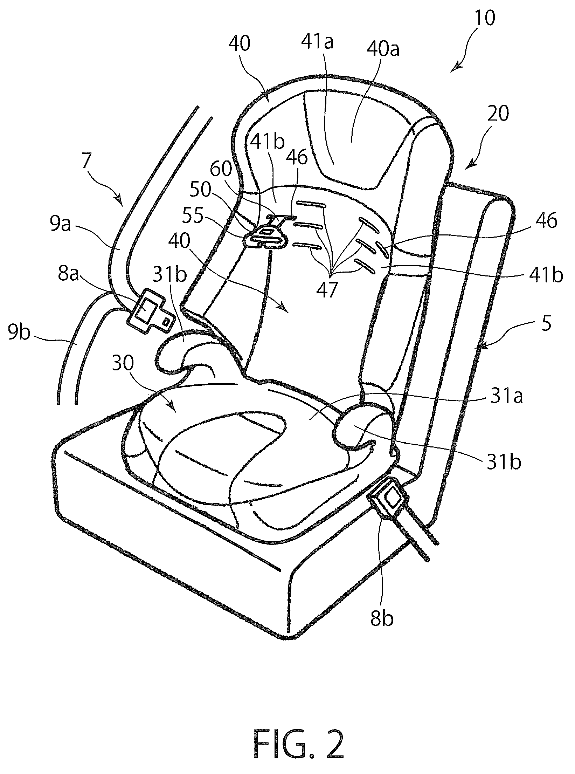

On the other hand, as described above, the back part 40 includes the rear part 41a facing the back of the child seated on the child seat 10 from behind, and the side parts 41b extending from both side peripheries of the rear part 41a to positions lateral to the child, i.e., extending from the side peripheries of the rear part 41a forward in the back and forth direction and outward in the width direction. As well shown in Fig. 2, in this embodiment, each side part 41b extends from the side periphery of the rear part 41a such that the side part 41a is bent forward with respect to the rear part 41a. Owing to this back part 40, as can be understood from Fig. 1, the child seated on the child seat 10 can be supported and protected by the side parts 41b from the lateral sides, when the vehicle sways laterally.

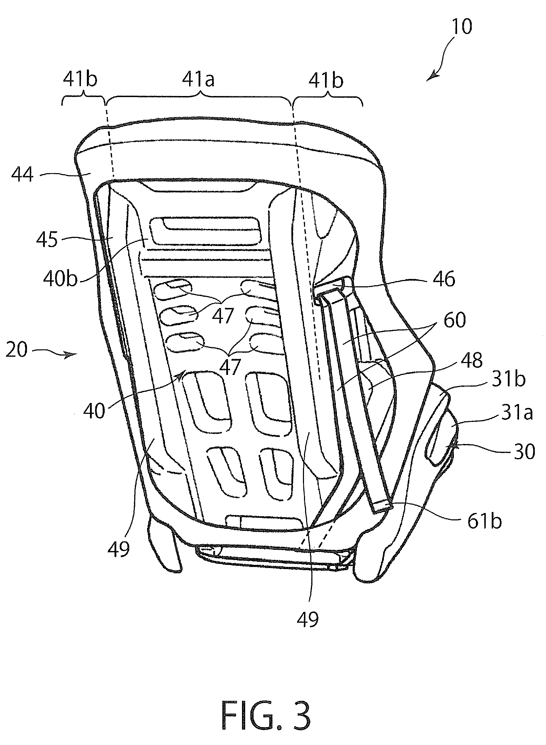

Similarly to the seat part 30, the back part 40 includes a core member 45, a cushion member (not shown) located above the core member 45, and a cover member 44 laid on the core member 45 to cover the cushion member (see, e.g., Fig 3). The core member 45 of the back part 40 has a shape similar to the outer shape of the back part 40.

Next, the strap member 60 fixed on the seat body 20 and the guide member 50 held by the strap member 60 are described.

The guide member 50 is a member that is engaged with the shoulder belt 9a of the seatbelt 7 installed on the vehicle so as to adjust the position of the shoulder belt 9a of the seatbelt 7. As shown in Fig. 7, the shoulder belt 9a of the seatbelt 7 slidably passes through a leading space (leading hole) 55 formed in the guide member 50 so as to extend via the leading space (leading hole) 55. Thus, as shown in Fig. 1, the guide member 50 can lead the shoulder belt 9a of the seatbelt 7 to a proper position, depending on the body size of the child seated on the child seat 10 placed on the vehicle seat 5. To be specific, the shoulder belt 9a is led to an area where the shoulder belt 9a is not in contact with the neck and does not fall down from the shoulder of the child along his/her arm.

As shown in Fig. 7, the leading space (leading hole) 55 of the guide member 50 is formed as an opening having an elongate outer contour corresponding to the sectional shape of the seatbelt 7. The guide member 50 further has a slit 56 connected to the leading space (leading hole) 55. As shown in Fig. 7, the gap (width) of the slit 56 is wider than the thickness of the seatbelt 7. Thus, by passing the seatbelt 7 through the slit 56 while curving or folding the seatbelt 7 in the leading space 55, the seatbelt 7 can be inserted through the leading space 55, and the seatbelt 7 can be taken out from the leading space 55.

When the seatbelt 7 is positioned in the leading space 55, the width direction (direction perpendicular to the thickness direction) of the seatbelt 7 crosses, typically crosses orthogonally the direction in which the slit 56 is extended (cut direction). Simultaneously, when the seatbelt 7 is positioned in the leading space 55, ends of the seatbelt 7 in the width direction are located on positions away from the slit 56. For these structures, it can be effectively prevented that the seatbelt 7 positioned in the leading space 55 unintentionally escapes from the leading space 55.

In addition, as shown in fig. 7, the guide member 50 has a plurality of elongate holes 51 through which the strap member 60 passes. The strap member 60 holds the guide member 50 in such a manner that the strap member 60 is engaged with the elongate holes 51 formed in the guide member 50, more specifically, the strap member 60 is inserted through the elongate holes 51 so as to be folded back. Thus, by varying the engagement position between the strap member 60 and the guide member 50, a length between an end of the strap member 60 attached to the seat body 20 (attached part 61a) and the position of the strap member 60 where the guide member 50 is held thereby can be adjusted.

However, the guide member 50 may be held by the strap member 60 by a structure different from the illustrated example. For example, the strap member 60 may pass through a single elongate hole 51 formed in the guide member 50 so as to be folded back, and a portion ahead of the elongate hole 51 of the folded strap member 60 and a portion behind the elongated hole 51 may be fixed to each other by a fixing tool. As the fixing tool, there may be used a so-called ladder having a plurality of holes through which the portions ahead of and behind the elongate hole 51 of the folded strap member 60 can continuously pass in an overlapped condition.

The above guide member may be formed as an injection molded article made of a resin, for example.

Next, the strap member 60 for holding the guide member 50 is described. The strap member 60 is formed of a flexible elongate member such as a string, a belt and the like. The strap member 60 has the attached part 61a attached to the seat body 20. In this embodiment, the attached part 61a of the strap member 60 is undetachably fixed on the seat body 20 with a rivet shown in Fig. 6, for example. This structure is advantageous in that loss of the guide member 50 serving as one of components of the child seat 10 can be effectively prevented. In addition, the guide member 50 functions as a security component to be engaged with the seatbelt 7. Namely, since the guide member 50 functioning as a security component is held by the strap member 60 that is undetachable from the seat body 20, this embodiment is significantly advantageous in terms of safety.

In this embodiment, one end of the strap member 60 formed of an elongate member is secured as the attached part 61a on the seat body 20. On the other hand, as shown in Fig. 3, the other end of the strap member 60 opposite to the attached part 61a is formed as a folded part 61b which has a thickness different from that of another portion of the strap member 60. To be specific, the thickness of the portion of the strap member 60 other than the folded part 61b is smaller than the thickness of the elongate holes 51 formed in the guide member 50, and the thickness of the folded part 61b of the strap member 60 is larger than the thickness of the elongate holes 51 formed in the guide member 50. As a result, the guide member 50 serving as a security component that is engaged with the seatbelt 7 is disengageably held by the strap member 60, which is significantly advantageous in terms security.

As shown in Fig. 6, the strap member 60 in this embodiment is attached to the seat part 30. Specifically, the strap member 60 is attached to the core member 35 of the seat part 30 at a center position in the lateral direction (width direction) of the seat body 20 or a position near thereto. As shown in Figs. 13 and 14, since the strap member 60 is attached to the seat part 30, when the child seat 10 is used with the back part 40 being detached from the seat body 20, the guide member 50 held by the strap member 60 attached to the sea part 30 can be also used.

As a structure related to the guide member 50 and the strap member 60, a housing part 22 configured to house the strap member 60 and the guide member 50 held by the strap member 60 is formed in the seat body 20. In this embodiment, as well shown in Fig. 6, the housing part 22 is disposed in the seat part 30 of the seat body 20. To be specific, the housing part 22 is structured as a recessed part formed in the core member 35 of the seat part 30. The recessed part forming the housing part 22 is formed in an area including the center portion of the body part 35a of the core member 35 in the lateral direction (width direction). The attached part 61a of the strap member 60 is fixed on the core member 35 at a position in the recessed part, a position adjacent to the recessed part, or a position near to the recessed part.

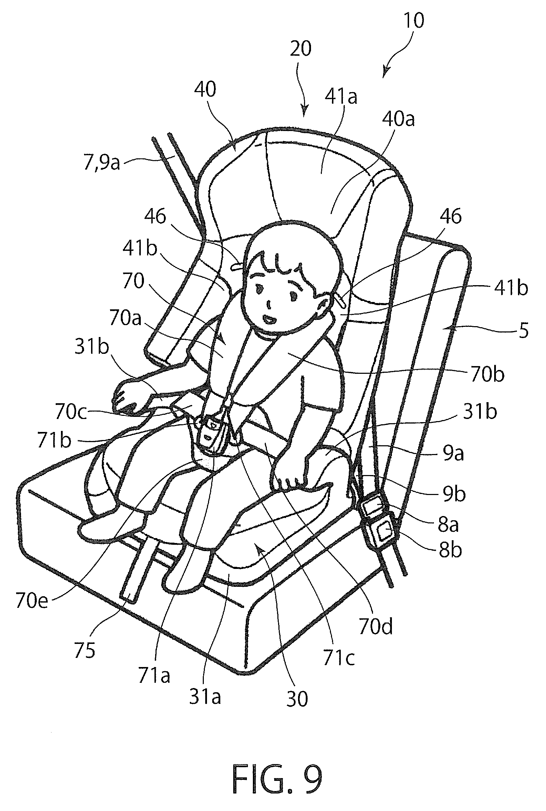

Due to the recessed part, when the guide member 50 is not in use, the guide member 50 and the strap member 60 holding the guide member 50 can be housed in the housing part 22. Thus, the loss of the guide member 50 and the strap member 60 can be prevented. Particularly in this embodiment, the strap member 60 holding the guide member 50 is undetachably fixed on the seat body 20. Thus, the child seat 10 is convenient in that, when handling the child seat 10, for example, when bringing the child seat 10 into the vehicle and placing it on the seat 5, the guide member 50 and the strap member 60 will not interfere with this process. In addition, as described below with reference to Figs. 9 to 12, in the child seat 10 in this embodiment, a child belt 70 can be fitted on the seat body 20. In this case, the body of the child seated on the child seat 10 is to be secured, not by the vehicle seatbelt 7, but by the dedicated child belt 70 fitted on the seat body 20. In the used condition shown in Figs. 9 to 12, since the seat body 20 is provided with the housing part 22, it can be prevented that the guide member 50 and the strap member 60 interfere with the use of the child seat 10.

The housing part 22 is formed in a portion that is covered with the cushion member 33 of the core member 35. Thus, the cushion member 33 can effectively prevent that the child seated on the seat part 30 of the seat body 20 of the child seat 10 feels uncomfortable because of the housing part 22 formed as a recessed part or the guide member 50 and the strap member 60 housed in the housing part 22.

As described above, when the guide member 50 is engaged with the shoulder belt 9a of the seatbelt 7, the seatbelt 7 securing the body of the seated child onto the seat body 20 of the child seat 10 can extend on a suitable position over the body of the child. As described above, the guide member 50 is held by the strap member 60 extending from the seat body 20, which can prevent the loss and so on.

However, the guide member 50 may be located on various positions away from the seat body 20 within a certain range. For example, when the guide member 50 and the strap member 60 are laid on the seat part 30 of the seat body 20 of the child seat 10, the guide member 50 and the strap member interfere with the process for boarding the child into the vehicle and seating the child on the seat part 30 of the child seat 10. In addition, in the narrow space of the vehicle, it is very bothersome to find out and/or pull the guide member 50 to engage the guide member 50 with the shoulder belt 9a of the seatbelt 7. Moreover, when the moving range of the guide member 50 is wide, there is a possibility that, upon impact on the vehicle, the guide member 50 in engagement with the shoulder belt 9a might move over a wide distance so that the shoulder belt 9a displaces from the proper position over the body of the seated child.

In order to deal with this problem, according to the child seat 10 in this embodiment, the through-hole 46 through which the guide member 50 held by the strap member 60 passes is formed in the back part 40 of the seat body 20. As shown in Fig. 4, the strap member 60 holding the guide member 50 extends rearward from the seat part 30. Thus, as shown in Fig. 3, the strap member 60, which extends from the seat body 20 toward a rear surface 40b of the back part 40 which does not face the child seated on the seat body 20, can run along the rear surface 40b of the back part 40 to pass through the through-hole 46. Then, as shown in Figs. 2 and 3, the guide member 50 held by the strap member 60 passes through the through-hole 46 from the side of the rear surface 40b of the back part 40. Thus, the guide member 50 is hung by the strap member 60 passing through the through-hole 46, on the side of a front surface 40a of the back part 40 which faces the child seated on the seat body 20.

Thus, according to this embodiment, as shown in Fig. 2, even when the guide member 50 is not in engagement with the shoulder belt 9a of the seatbelt 7, the guide member 50 can be positioned on the front surface 40a of the back part 40. In particular, by adjusting the position at which the guide member 50 is held by the strap member 60, the guide member 50, which is not in engagement with the shoulder belt 9a of the seatbelt 7, can be invariably located on a position near to the through-hole 46 in the front surface 40a of the back part 40.

In this case, it can be prevented that the guide member 50 interferes with the process for boarding the child into the vehicle and seating the child on the seat part 30 of the child seat 10. In addition, the operation for engaging the guide member 50 with the shoulder belt 9a of the seatbelt 7 can be easily carried out. Furthermore, since the movement of the guide member 50 is positioned within a narrow range by the strap member 60, it can be effectively prevented that, upon impact on the vehicle, the guide member 50 in engagement with the shoulder belt 9a moves over a wide distance. Namely, the shoulder belt 9a can be stably disposed on the proper position over the body of the seated child, whereby the child seated on the child seat 10 can be stably secured onto the seat of the vehicle, by using the seatbelt 7 installed on the vehicle.

In addition, as well shown in Fig. 3, the strap member 60 extending rearward from the seat body 20 extends up to the through-hole 46 along the rear surface 40b of the back part 40. A reinforcement rib 49 for reinforcing the back part 40 itself extends in the up and down direction on the rear surface 40b of the back part 40. The strap member 60 extends along the reinforcement rib 49 up to the through-hole 46. That is to say, in the illustrated condition, the rear surface 40b of the back part 40 is provided with the reinforcement rib 49 extending in the up and down direction, and the reinforcement rib 49 defines a path along which the strap member 60 is held. Thus, the position of the guide member 50 held on the side of the front surface 40a of the back part 40 can be made stable.

As well shown in Fig. 2, two through-holes 46 are formed in the back part 40 of the seat body 20 such that the two through-holes 46 are away from each other in the lateral direction (width direction) of the back part 40. To be more strict, the two through-holes 46 are located on symmetrical positions about the center in the lateral direction. The inclination direction of the shoulder belt 9a of the seatbelt 7 installed on the vehicle differs, depending on the position of the seat 5 on which the child seat 10 is placed inside the vehicle. Specifically, in the illustrated example, the shoulder belt 9a of the seatbelt 7 is engaged with the guide member 50, which has passed through the through-hole 46 located on a position near to the right shoulder of a seated person, so that the shoulder belt 9a is guided to extend diagonally from the right shoulder of the seated person to the left waist thereof. However, depending on the position on which the child seat 10 is placed, there is a case in which the shoulder belt 9a extends diagonally from the left shoulder of the seated person to the right waist thereof. In this case, according to the present invention, the guide member 50 is made to pass through the through-hole 46 located near to the left shoulder of the seated person, so that the shoulder belt 9a of the seatbelt 7 can be led to extend diagonally from the left shoulder of the seated person to the right waist thereof. Namely, only the single guide member 50 can be used with the two shoulder belts 9a inclined in the two different directions.

In addition, the attachment part 61a of the strap member 60 holding the guide member 50, which is attached to the seat body 20, is positioned between the two through-holes 46 in the lateral direction. In particular, as described above, the strap member 60 is fixed on the seat body 20 of the child seat 10 having the substantially symmetrical structure in the lateral direction, at the center area of the seat body 20 in the lateral direction. Thus, the guide member 50 can be used with the shoulder belts 9a inclined in the two different directions, by changing the through-hole 46 through which the guide member 50 should pass, without the need for adjusting a position at which the guide member 50 is held by the strap member 60.

In addition, as described above, as well shown in Fig. 3, the back part 40 includes the rear part 41a which faces the child seated on the child seat 10 from behind, and the side parts 41b extending from the both side peripheries of the rear part 41a to the positions lateral to the child. Each of the through-holes 46 is formed in the area including the position where the rear part 41a and the side part 41b are joined to each other, or in the side part 41b. In other words, at least a part of each through-hole 46 is formed in the side part 41b. When the through-hole 46 is formed in such a position, the shoulder belt 9a can be stably guided by the guide member 50 passing through the through-hole 46, in such a manner that the shoulder belt 9a of the seatbelt 7 diagonally extends over the body of the seated person from the shoulder of the seated person on one side to the waist thereof on the other side, while the shoulder belt 9a can be effectively prevented from getting into touch with the neck of the seated person and disengaging from the shoulder of the seated person.

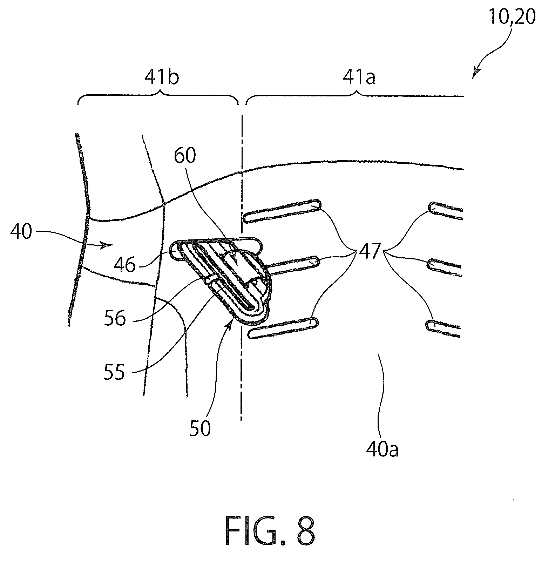

Further, as well shown in Fig. 8, the outer contour (opening shape) of each through-hole 46 is of a shape corresponding to the outer contour of the guide member 50 that passes through the through-hole 46. More specifically, the outer contour (opening shape) of each thorough-hole 46 is designed such that the guide member 50 can pass through the through-hole 46 when the guide member 50 is in a predetermined orientation (direction), but cannot pass through the through-hole 46 when it is in an orientation (direction) other than the predetermined orientation (direction). As well shown in Figs. 7 and 8, the guide member 50 has a flat shape as a whole, and has an elongate shape as a whole correspondingly to the opening shape of the leading space 55 that receives the seatbelt 7. Thus, when observed from the direction along the longitudinal direction of the leading space 55, the guide member 50 has the smallest size (projected area).

As shown in Fig. 8, the guide member 50 held by the strap member 60 can pass through the through-hole 46 of the back part 40, when the guide member 50 is moved relative to the through-hole 46 along the longitudinal direction of the leading space 55. On the other hand, the guide member 50 cannot pass through the through-hole 46 of the back part 40 when the guide member 50 is moved relative to the through-hole 46 along another orientation (direction), e.g., along the direction perpendicular to the longitudinal direction of the leading space 55. That is to say, the width of the guide member 50 along the longitudinal direction of the leading space (opening) 55 is larger than the maximum width of the through-hole 46, and the width of the guide member 50 along the direction perpendicular to the longitudinal direction of the leading space (opening) 55 is smaller than the maximum width of the through-hole 46. Since the through-hole 46 has such an outer contour (opening shape), the guide member 50 can be prevented from being unintentionally passed through the through-hole 46. Namely, the guide member 50 can be stably held by the strap member 60 pending down from the through-hole 46, such that the guide member 50 is supported on the front surface 40a of the back part 40.

As well shown in Fig. 2, in addition to the through-holes 46, the back part 40 further has second through-holes 47 through which the child belt 70 (see Figs. 9 to 12) can pass. The through-hole 46 through which the guide member 50 held by the strap member 60 can pass, and the second through-hole 47 through which the child belt 70 can pass are located on different positions and have different outer contours (opening shapes), based on the difference in use (technical significance).

As described above, the guide member 50 is to be engaged with the shoulder belt 9a of the seatbelt 7 that diagonally extends over the body of the seated child from the shoulder of the child on one side to the waist thereof on the other side. In order to prevent that the shoulder belt 9a gets in touch with the neck of the seated child or falls down from the shoulder of the child, at least a part of the through-hole 46 is formed in the side part 41b that is laterally adjacent to the rear part 41a facing the child from behind (see Fig. 3). Meanwhile, the second through- holes 47 are holes through which a pair of shoulder belts 70a and 70b of the child belt 70, which is constituted as a five-point belt or a three-point belt, can pass. The shoulder belts 70a and 70b extend over the body of the seated child from the shoulders of the child toward the belly thereof substantially in the up and down direction (longitudinal direction). Thus, in order that the shoulder belts 70a and 70b of the child belt 70 disengage from the shoulders of the seated child, the second through-holes 47 are formed on positions near to the shoulders of the child.

Thus, differently from the aforementioned through-holes 46, the second through-holes 47 are formed in the rear part 41a of the back part 40 (see Fig. 3). Namely, each of the through-holes 46 through which the guide member 50 can pass is formed on the position that is laterally outward from the second through-hole 47 through which the child belt 70 can pass, i.e., the position that is away from the second through-hole 47 along the lateral direction from the center of the back part 40 in the lateral direction.

The through-hole 46 is a hole through which the guide member 50 held by the strap member 60 and engaged with the vehicle seatbelt 7 can pass, while the second through-hole 47 is a hole through which the child belt 70 can pass. Thus, in this embodiment, as shown in Fig. 8, the through-hole 46 has the outer contour (opening shape) that is different from that of the second through-hole 47.

A used condition of the child seat 10 with the child belt 70 shown in Figs. 9 to 12 is described. The child seat 10 with the child belt 70, which is shown in Figs. 9 to 12, can be used with a younger child, as compared with the child seat 10 shown in Figs. 1 to 8. In this condition, the child seat 10 is fixed on the vehicle seat 5 by the seatbelt 7 installed on the vehicle, and the body of the seated child is secured by the dedicated child belt 70 onto the child seat 10.

The child belt 70 is firstly described. In the illustrated example, the child belt 70 includes a crotch belt 70e extending between the legs of the child seated on the seat body 20, right and left waist belts 70c and 70d extending from laterally outward portions of the waist of the child toward an end of the crotch belt 70e, and the right and left shoulder belts 70a and 70b extending from upper portions of the shoulders of the child toward the end of the crotch belt 70e. The end of the crotch belt 70e is provided with a fixing buckle 71a. There are further provided a first locking piece 71b by which one belt is folded back to define the right shoulder belt 70a and the right waist belt 70c, and a second locking piece 71c by which one belt is folded back to define the left shoulder belt 70b and the left waist belt 70d. The first locking piece 71b and the second locking piece 71c can be respectively engaged with the fixing buckle 71a.

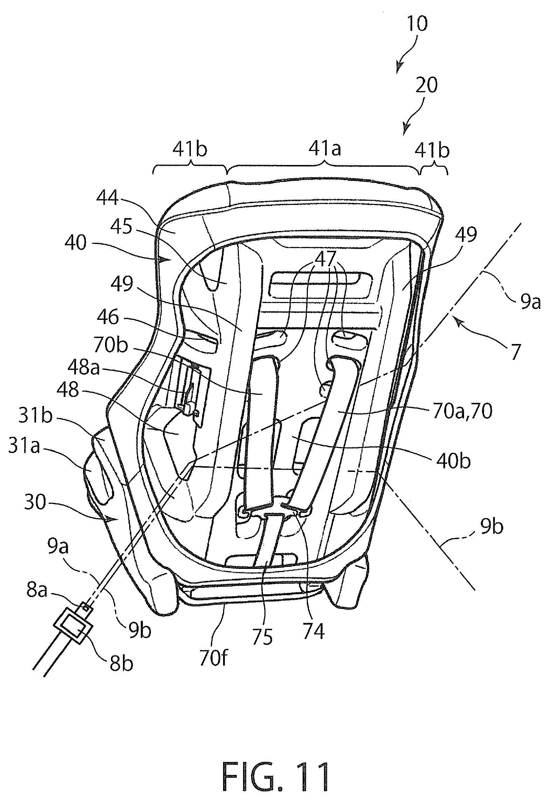

The right and left waist belts 70c and 70d are joined to each other through an intermediate belt 70f (see Fig. 11) that extends over the seat body 20 on the side thereof which does not face the seated person. Namely, the right and left shoulder belts 70a and 70b of the child belt 70 and the right and left waist belts 70c and 70d are formed of one belt. End portions of the one belt provide end portions of the right and left shoulder belts 70a and 70b. As shown in Fig. 11, the end portions of the right and left shoulder belts 70a and 70b pass through the second through-holes 47 so as to be connected to a metal fitting 74. The metal fitting 74 is connected to a withdrawal device 76 (see Fig. 5) incorporated in the core member 35 of the seat part 30, through a withdrawal strap 75 extending over the seat body 20 on the side thereof which does not face the seated person.

In this structural example, by fitting the first and second locking pieces 71b and 71c into the fixing buckle 71a, the child seated on the seat body 20 is fastened by the child belt 70. Thereafter, the child belt 70 is tightened by the withdrawal device 76 through the right and left shoulder belts 70a and 70b, so that the body of the seated child can be secured onto the seat body 20 through the child belt 70.

As shown in Fig. 5, the core member 35 of the seat part 30 has a housing part 23 configured to house the metal fitting 74 and the withdrawal strap 75. When the child belt 70 is not in use, the metal fitting 74 and the withdrawal strap 75 can be housed in the housing part 23. In the state shown in Fig. 5, the metal fitting 74 and the withdrawal strap 75 wound therearound are housed in the housing part 23.

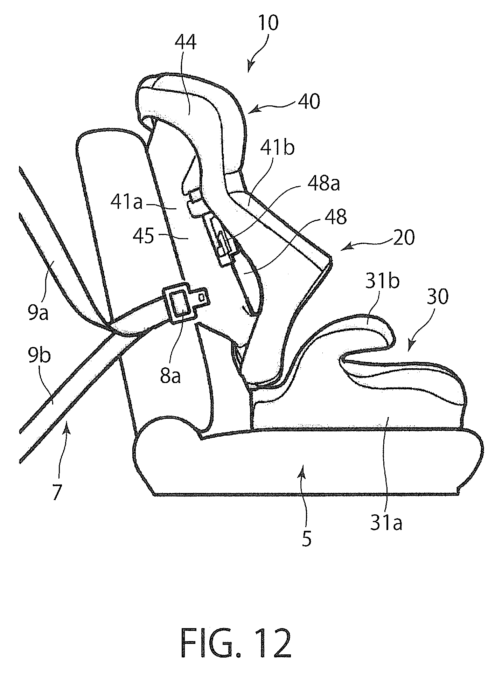

Next, the manner of fixing the child seat 10 equipped with the child belt 70 onto the vehicle seat 5 is described. As shown in Figs. 11 and 12, insertion parts (through-holes) 48 through which the vehicle seatbelt 7 can pass are formed in the core member 45 of the back part 40 of the seat body 20. Fixing tools 48a configured to grip the seatbelt 7 are respectively disposed above opposed ends of the insertion parts 48. As shown by the one-dot chain lines in Fig. 11, the child seat 10 is fixed onto the seat 5, with the engagement piece 8a of the seatbelt 7 passing through the insertion parts 48 so as to be locked on the fixing buckle 8b, and the shoulder belt 9a being fixed by the fixing tool 48a disposed above the insertion part 48 from which the seatbelt 7 enters.

In the used condition shown in Figs. 9 to 12, the guide member 50 and the strap member 60 holding the guide member 50 are not used. Thus, in the used condition shown in Figs. 9 to 12, the guide member 50 and the strap member 60 wound around the guide member 50 can be housed and stored in the housing part 22 formed in the core member 35 of the seat part 30.

As already mentioned, as shown in Figs. 13 and 14, the child seat 10 in this embodiment can be used, with the back part 40 being detached from the seat body 20. The child seat 10 shown in Figs. 13 and 14 can be used for an older child, as compared with the child seat 10 shown in Figs. 1 to 8. The used condition shown in Figs. 13 and 14 differs from the used condition shown in Figs. 1 to 8 only in that the back part 40 is removed. As described above, also in this used condition shown in Figs. 13 and 14, since the guide member 50 is held by the strap member 60 attached to the seat part 30, the guide member 50 can be used for leading the shoulder belt 9a of the seatbelt 7 while avoiding the loss of the guide member 50.

According to the aforementioned embodiment, the through-hole 46 through which the guide member 50 held by the strap member 60 can pass is formed in the back part 40 of the seat body 20. Thus, the guide member 50 can be positioned on the front surface 40a of the back part 40 by the strap member 60 pending down from the through-hole 46. Thus, it can be prevented that the guide member 50 interferes with the process for boarding the child into the vehicle and seating the child on the seat part 30 of the child seat 10. In addition, the operation for engaging the shoulder belt 9a of the seatbelt 7 with the guide member 50 can be easily carried out. Moreover, the shoulder belt 9a can be stably located on a proper position over the body of the seated child.

In addition, according to the child seat 10 in this embodiment, by adjusting the position of the strap member 60 where the guide member 50 is held thereby, the position of the guide member 50 can be adjusted in accordance with the growth of a child. Further, since the two through-holes 46 are formed in the back part 40 on positions away from each other in the lateral direction, the shoulder belts 9a inclined in two different directions can be guided to proper positions by means of the single guide member 50. Furthermore, according to this embodiment, differently from the seat disclosed in the above JP2000-503281T, the child seat 10 is advantageous in terms of safety because a belt holding device projectingly fixed on the seat body is unnecessary.

The above-described embodiment can be variously modified within the scope of the present invention. One modification example is described below.

In the above embodiment, there is described the example in which the pair of through-holes 46 are formed so as to be away from each other in the lateral direction. However, not limited thereto, plural pairs of through-holes 46 may be formed so as to be away from one another in the up and down direction of the back part 40, for example. As described above, the position of the guide member 50 can be adjusted by adjusting the position at which the guide member 50 is held by the strap member 60. However, in this modification example, the position of the guide member 50 can be adjusted by adjusting the position at which the guide member 50 is held by the strap member 60, also by selecting a through-hole 46 that is located on the best position for guiding the shoulder belt 9a, from the plurality of through-holes 46 located away from one another in the up and down direction, in consideration of the body size of a child, and by passing the guide member 50 through the selected through-hole 46.

In the above-described embodiment, there are described not only the condition in which the child seat 10 can be used as shown in Figs. 1 to 8, but also the condition in which the child seat 10 can be used with the child belt 70, which is shown in Figs. 9 to 12, and the condition in which the child seat 10 can be used with the back part 40 being removed therefrom, which is shown in Figs. 13 and 14. However, for example, the child seat 10 cannot be used, in the condition in which the child seat 10 is used with the child belt 70. In addition, the child seat 10 cannot be used, in the example in which the child seat 10 is used with the back part 40 being removed therefrom.

Further, in the above-described embodiment, there is described the example in which the seat body 20 can be equipped with the child belt 70. However, not limited thereto, the seat body 20 cannot be equipped with the child belt 70. In this case, the second through-holes 47 are not needed to be formed in the back part 40. In addition, in the above-described embodiment, there is described the example in which the back part 40 of the seat body 20 is detachable from the seat part 30. However, not limited thereto, the back part 40 may be undetachable from the seat part 30. Furthermore, in the above-described embodiment, there is described the example in which the strap member 60 holding the guide member 50 is attached to the seat part 30. However, not limited thereto, the strap member 60 may be attached to the back part 40.

## Claims

1. A child seat to be placed on a seat of a vehicle equipped with a seatbelt (7), the child seat comprising:
a seat body (20) including a seat part (30) and a back part (40);
a strap member (60) having an attached part (61a) attached to the seat body (20); and
a guide member (50) held on a position away from the attached part (61a) of the strap member (60), the guide member (50) being engageable with a shoulder belt (9a) of the seatbelt of the vehicle;
**characterized in that** a through-hole (46) through which the guide member (50) held by the strap member can pass is formed in the back part (40),
the strap member (60) extends from the seat body (20) to a side which does not face the child seated on the seat body (20); and
the through-hole (46) formed in the back part (40) is configured such that the guide member (50) held by the strap member (60) can pass therethrough from a side of a rear surface of the back part (40) which does not face the child seated on the seat body (20);
and
wherein a path of the strap member (60) is formed in the rear surface of the back part (40), the path leading to the through-hole (46), and the path is defined by a reinforcement rib (49) disposed on the rear surface of the back part (46) so as to extend in an up and down direction.

2. The child seat according to claim 1, wherein:
two through-holes (46) are formed on positions away from each other in a lateral direction of the back part (40); and
the two through-holes (46) are located on symmetrical positions about a center in the lateral direction, and the attached part (61a) of the strap member (60) is positioned between the two through-holes in the lateral direction.

3. The child seat according to claim 1 or 2, wherein an opening shape of the through-hole (46) is determined such that the guide member (50) can pass through the through-hole (46) when the guide member (50) is in a predetermined orientation, but cannot pass through the through-hole (46) when the guide member is in an orientation other than the predetermined orientation.

4. The child seat according to any one of claims 1 to 3, wherein:
an elongate opening (55) is formed in the guide member (50) through which the shoulder belt (9a) of the seatbelt (7) of the vehicle may slidably pass; and
a width of the guide member (50) along a longitudinal direction of the opening (55) is larger than a maximum width of the through-hole (46), and a width of the guide member (50) along a direction perpendicular to the longitudinal direction of the opening (55) is smaller than the maximum width of the through-hole (46).

5. The child seat according to any one of claims 1 to 4, wherein:
a child belt (70) for securing a child onto the seat body (20) can be fitted on the seat body (20);
a second through-hole (47) through which the child belt (70) can pass is further formed in the back part (40); and
the through-hole (46) is formed, as a hole separated from the second through-hole (47), laterally outward from the second through-hole (47).

6. The child seat according to any one of claims 1 to 5, wherein:
the back part (40) includes a rear part (41a) facing a child seated on the seat body (20) from behind, and a side part (41b) extending from a side periphery of the rear part (41a) to a position lateral to the child; and
the through-hole (46) is formed in an area including a position where the rear part (41a) and the side part (41b) are joined to each other, or in the side part (41b).

7. The child seat according to any one of claims 1 to 6, wherein
the attached part (61a) of the strap member (60) is fixed to the seat part (30) of the seat body (20).

8. The child seat according to claim 7, wherein
the back part (40) of the seat body (20) is detachable from the seat part (30).

9. The child seat according to any one of claims 1 to 8, wherein
a housing part (22) capable of housing the guide member (50) and the strap member (60) is formed in the seat body.

10. The child seat according to claim 9, wherein:
the seat part (30) of the seat body (20) includes a core member (35) and a cushion member (33) located above the core member; and
the housing part (22) is formed by a recessed part disposed in a portion of the core member (35), the portion being covered with the cushion member (33).

## Patentansprüche

1. Kindersitz, welcher auf dem Sitz eines mit einem Sitzgurt (7) ausgerüsteten Fahrzeuges zu platzieren ist und umfasst:
einen Sitzkörper (20) mit einem Sitzteil (30) und einem Lehnenteil (40);
ein Gurtelement (60) mit einem Anbringteil (61a), welches an dem Sitzkörper (20) angebracht ist; und
ein Führungselement (50), welches in einer Position weg von dem Anbringteil (61a) des Gurtelementes (60) gehalten ist, wobei das Führungsteil (50) mit einem Schultergurt (9a) des Sitzgurtes des Fahrzeuges verbindbar ist;
**dadurch gekennzeichnet, dass** ein Durchgangsloch (46), durch welches hindurch das von dem Gurtelement gehaltene Führungselement (50) passieren kann, in dem Lehnenteil (40) ausgebildet ist;
das Gurtelement (60) von dem Sitzkörper (20) zu einer Seite sich erstreckt, welche nicht dem auf dem Sitzkörper (20) sitzenden Kind zugewandt ist; und
das Durchgangsloch (46) im Lehnenteil (40) so konfiguriert ist, dass das von dem Gurtelement (60) gehaltene Führungselement (50) von einer Seite einer Rückenfläche des Lehnenteils (40) hindurch passieren kann, welche nicht dem auf dem Sitzkörper (20) sitzenden Kind zugewandt ist;
und
wobei ein Pfad des Gurtelementes (60) in der Rückenfläche des Lehnenteils (40) geformt ist, welcher Pfad zu dem Durchgangsloch (46) führt und durch eine Verstärkungsrippe (49) definiert ist, welche an der Rückenfläche des Lehnenteils (40) in Aufwärts- und Abwärtsrichtung weisend angeordnet ist.

2. Kindersitz nach Anspruch 1, bei dem:
zwei Durchgangslöcher (46) an Positionen ausgebildet sind, die in seitlicher Richtung des Lehnenteiles (40) mit Abstand sich befinden; und
die beiden Durchgangslöcher (46) symmetrisch zur Mitte in seitlicher Richtung gelegen sind und das Anbringteil (61a) des Gurtelementes (60) zwischen den beiden Durchgangslöchern in seitlicher Richtung positioniert ist.

3. Kindersitz nach Anspruch 1 oder 2, bei dem
eine Öffnungsform des Durchgangsloches (46) so bestimmt ist, dass das Führungselement (50) durch das Durchgangsloch (46) hindurchpasst, wenn das Führungsteil (50) in einer vorbestimmten Orientierung sich befindet, jedoch nicht durch das Durchgangsloch hindurch passt, wenn das Führungselement in einer anderen als in der vorbestimmten Orientierung sich befindet.

4. Kindersitz nach einem der Ansprüche 1 bis 3, bei dem:
eine Längsöffnung (55) in dem Führungsteil (50) ausgebildet ist, durch welche hindurch der Schultergurt (9a) des Sitzgurtes (7) des Fahrzeuges gleitend hindurchlaufen kann; und
die Breite des Führungselementes (50) in Längsrichtung der Längsöffnung (55) größer als die maximale Weite des Durchgangsloches (46) ist und die Breite des Führungselementes in Richtung senkrecht zur Längsrichtung der Längsöffnung (55) kleiner als die maximale Weite des Durchgangsloches (46) ist.

5. Kindersitz nach einem der Ansprüche 1 bis 4, bei dem:
ein Kindergurt (70) zum Sichern eines Kindes auf dem Sitzkörper (20) an diesem angebracht sein kann;
ein zweites Durchgangsloch (47), durch welches der Kindergurt (70) durchlaufen kann, in dem Lehnenteil (40) ausgebildet ist; und
das Durchgangsloch (46) als ein seitlich auswärts von dem zweiten Durchgangsloch (47) gelegenes getrenntes Loch ausgebildet ist.

6. Kindersitz nach einem der Ansprüche 1 bis 5, bei dem
das Lehnenteil (40) ein Rückenteil (41a) hat, welches einem auf dem Sitzkörper (20) sitzenden Kind von hinten zugewandt, und ein Seitenteil (41b) hat, das von der seitlichen Peripherie des Rückenteils (41a) in eine Position seitlich von dem Kind sich erstreckt; und
das Durchgangsloch (46) in einem Gebiet ausgebildet ist, welches eine Position umfasst, in welcher das Rückenteil (41a) und das Seitenteil (41b) aneinander angrenzen, oder in dem Seitenteil (41b) ausgebildet ist.

7. Kindersitz nach einem der Ansprüche 1 bis 6, bei dem das Anbringteil (61 a) des Gurtelementes (60) an dem Sitzteil (30) des Sitzkörpers (20) fixiert ist.

8. Kindersitz nach Anspruch 7, bei dem
das Lehnenteil (40) des Sitzkörpers (20) vom Sitzteil (30) lösbar ist.

9. Kindersitz nach einem der Ansprüche 1 bis 8, bei dem
ein Gehäuseteil (22), welches zur Aufnahme des Führungselementes (50) und des Gurtelementes (60) fähig ist, in dem Sitzkörper ausgebildet ist.

10. Kindersitz nach Anspruch 9, bei dem:
das Sitzteil (30) des Sitzkörpers (20) ein Kernelement (35) und ein Kissenelement (33) auf dem Kernelement umfasst; und
das Gehäuseteil (22) von einer Aussparung gebildet ist, die in einem Abschnitt des Kernelementes (35) angeordnet ist, wobei der Abschnitt von dem Kissenelement (33) überdeckt ist.

## Revendications

1. Siège enfant destiné à être placé sur un siège d'un véhicule équipé d'une ceinture de sécurité (7), le siège enfant comprenant :
un corps de siège (20) comprenant une partie de siège (30) et une partie de dossier (40) ;
un élément de sangle (60) ayant une partie fixée (61a) fixée au corps de siège (20) ; et
un élément de guidage (50) maintenu dans une position à distance de la partie fixée (61a) de l'élément de sangle (60), l'élément de guidage (50) pouvant être mis en prise avec une épaulière (9a) de la ceinture de sécurité du véhicule ;
**caractérisé en ce qu'**un trou débouchant (46) à travers lequel l'élément de guidage (50) maintenu par l'élément de sangle peut passer, est formé dans la partie de dossier (40),
l'élément de sangle (60) s'étend à partir du corps de siège (20) jusqu'à un côté qui ne fait pas face à l'enfant assis sur le corps de siège (20) ; et
le trou débouchant (46) formé dans la partie de dossier (40) est configuré de sorte que l'élément de guidage (50) maintenu par l'élément de sangle (60) peut passer à travers ce dernier à partir d'un côté d'un surface arrière de la partie de dossier (40) qui ne fait pas face à l'enfant assis sur le corps de siège (20) ; et
dans lequel une trajectoire de l'élément de sangle (60) est formée dans la surface arrière de la partie de dossier (40), la trajectoire menant au trou débouchant (46), et la trajectoire est définie par une nervure de renforcement (49) disposée sur la surface arrière de la partie de dossier (46) afin de s'étendre dans une direction ascendante et descendante.

2. Siège enfant selon la revendication 1, dans lequel :
deux trous débouchants (46) sont formés dans des positions à distance l'un de l'autre dans une direction latérale de la partie de dossier (40) ; et
les deux trous débouchants (46) sont positionnés dans des positions symétriques autour d'un centre dans la direction latérale, et la partie fixée (61a) de l'élément de sangle (60) est positionnée entre les deux trous débouchants dans la direction latérale.

3. Siège enfant selon la revendication 1 ou 2, dans lequel :
une forme d'ouverture du trou débouchant (46) est déterminée de sorte que l'élément de guidage (50) peut passer à travers le trou débouchant (46) lorsque l'élément de guidage (50) est dans une orientation prédéterminée, mais ne peut pas passer à travers le trou débouchant (46) lorsque le l'élément de guidage est dans une orientation différente de l'orientation prédéterminée.

4. Siège enfant selon l'une quelconque des revendications 1 à 3, dans lequel :
l'ouverture allongée (55) et formée dans l'élément de guidage (50) à travers lequel l'épaulière (9a) de la ceinture de sécurité (7) du véhicule peut passer de manière coulissante ; et
une largeur de l'élément de guidage (50) le long d'une direction longitudinale de l'ouverture (55) est plus grande qu'une largeur maximum du trou débouchant (46), et une largeur de l'élément de guidage (50) le long d'une direction perpendiculaire à la direction longitudinale de l'ouverture (55) est inférieure à la largeur maximum du trou débouchant (46).

5. Siège enfant selon l'une quelconque des revendications 1 à 4, dans lequel :
la ceinture pour enfant (70) pour fixer un enfant sur le corps de siège (20) peut être montée sur le corps de siège (20) ;
un second trou débouchant (47) à travers lequel la ceinture enfant (70) peut passer, est en outre formé dans la partie de dossier (40) ; et
le trou débouchant (46) est formé, sous la forme d'un trou séparé du second trou débouchant (47), latéralement vers l'extérieur par rapport au second trou débouchant (47).

6. Siège enfant selon l'une quelconque des revendications 1 à 5, dans lequel :
la partie de dossier (40) comprend une partie arrière (41a) faisant face à un enfant assis sur le corps de siège (20) de derrière, et une partie latérale (41b) s'étendant à partir d'une périphérie latérale de la partie arrière (41a) jusqu'à une position latérale par rapport à l'enfant ; et
le trou débouchant (46) est formé dans une zone comprenant une position dans laquelle la partie arrière (41a) et la partie latérale (41b) sont assemblées, ou dans la partie latérale (41b).

7. Siège enfant selon l'une quelconque des revendications 1 à 6, dans lequel :
la partie fixée (61a) de l'élément de sangle (60) est fixée sur la partie de siège (30) du corps de siège (20).

8. Siège enfant selon la revendication 7, dans lequel :
la partie arrière (40) du corps de siège (20) est détachable de la partie de siège (30).

9. Siège enfant selon l'une quelconque des revendications 1 à 8, dans lequel :
une partie de logement (22) capable de loger l'élément de guidage (50) et l'élément de sangle (60) est formé dans le corps de siège.

10. Siège enfant selon la revendication 9, dans lequel :
la partie de siège (30) du corps de siège (20) comprend un élément d'âme (35) et un élément de coussin (33) positionné au-dessus de l'élément d'âme ; et
la partie de logement (22) est formée par une partie évidée disposée dans une partie de l'élément d'âme (35), la partie étant recouverte avec l'élément de coussin (33).
